**Europäisches Patentamt**

**European Patent Office**

**Office européen des brevets**

(19)

(11) Veröffentlichungsnummer: **0 258 438 B1**

# EUROPÄISCHE PATENTSCHRIFT

(12)

(45) Veröffentlichungstag der Patentschrift:
08.05.91 Patentblatt 91/19

(51) Int. Cl.$^5$: **G01N 29/04**

(21) Anmeldenummer: 86902583.3

(22) Anmeldetag: 27.02.86

(86) Internationale Anmeldenummer:
PCT/SU86/00017

(87) Internationale Veröffentlichungsnummer:
WO 87/05391 11.09.87 Gazette 87/20

(54) **ULTRASCHALL-UMWANDLER.**

(43) Veröffentlichungstag der Anmeldung:
09.03.88 Patentblatt 88/10

(45) Bekanntmachung des Hinweises auf die
Patenterteilung:
08.05.91 Patentblatt 91/19

(84) Benannte Vertragsstaaten:
AT DE FR GB IT NL SE

(56) Entgegenhaltungen:
EP-A- 0 161 587
EP-A- 0 229 840
DE-A- 3 004 689
SU-A- 1 146 595
SU-A- 1 185 230
SU-A- 4 334 432
US-A- 4 528 854

(73) Patentinhaber: VSESOJUZNY
NAUCHNO-ISSLEDOVATELSKY INSTITUT PO
STROITELSTVU MAGISTRALNYKH
TRUBOPROVODOV
Okruzhnoi proezd, 19
Moscow, 105058 (SU)

(72) Erfinder: FALKEVICH, Sergei Alexandrovich
ul. 5-ya Parkovaya, 52-31
Moscow, 105264 (SU)

(74) Vertreter: Ebbinghaus, Dieter et al
Patentanwälte v. Füner, Ebbinghaus, Finck
Mariahilfplatz 2 & 3
W-8000 München 90 (DE)

EP 0 258 438 B1

## Beschreibung

Bekannt ist, ein Ultraschallwandler, der n gleiche und elektrisch isolierte Piezoelemente enthält, die auf der Oberfläche eines zu prüfenden Erzeugnisses befestigt werden. Jedes Piezoelement ist über einen eigenen Verstärker an eine Verzögerungsleitung angeschlossen, die durch einen Treppenspannungsgenerator gesteuert wird. Werden sämtlichen Piezoelementen elektrische Signale gleicher Amplitude so zugeführt, daß das Signal an jedem nachfolgenden Element dem Signal des vorhergehenden nacheilt, so werden die Ultraschallschwingungen im zu prüfenden Erzeugnis phasengleich auf der akustischen Achse summiert, die gegen die geometrische Wandlerachse versetzt ist. Bei Änderung der Phasendifferenz der den benachbarten Piezoelementen zugeführwhere Signale wird die Lage der akustischen Wandlerachse geändert, d.h. es erfolgt Eine elektrische Abtastung (s. z.B. Thesen der Berichte der Konferenz "Ultrazvukovaya defektoskopia svarnykh konstruktsy (Ultraschalldefektoskopie für Schweisskonstruktionen)", V.V.Gorodkov, I.P.Mansurenko, L.I.Yanchevskaya "Ultrazvukovoi preobrazovatel s sistemoi elektronnogo kachania lucha (Ultraschallwandler mit einem elektronischen System zur Wobbelung des Ultraschallstrahls)", RPT TSNIITS, Leningrad, 1973, S. 119 bis 121).

Nachteilig bei dem Wandler ist eine relativ geringe Sicherheit, die mit einer niedrigen Zuverlässigkeit, mit Amplituden- und Phasenverzerrungen der Signale zur Erregung der Piezoelemente im Wandler und mit einer großen Anzahl von Verstärken verbunden ist, die der Anzahl der Piezoelemente gleich ist.

Bei dem im Oberbegriff des Patentansprüchs 1 beschriebenen, aus der SU-A-862070 bekannten Ultraschallwandler enthalten die Schaltungen zur elektrischen Signalübertragung steuerbare kapazitive Elemente, die parallel zu jedem Piezoelement liegen, und steuerbare induktive Elemente, die zwischen die benachbarten Piezoelemente geschaltet sind. Die Werte der steuerbaren kapazitiven und induktiven Elemente stehen im Zusammenhang mit der Neigungswinkelgröße der akustischen Welle.

Diese bekannten Ultraschallwandler haben, wenn insbesondere dickwandige Erzeugnisse geprüft werden, eine relativ geringe Prüfleistung, die durch einen geringen Abtastsektor bedingt ist. Das letztere ist damit verbunden, daß die Verzögerungsleitung aus gesteuerten induktiven und kapazitiven Elementen eine Grenzfrequenz hat, die mögliche Regelgrenzen für diese Elemente beschneidet und zur Verzerrung des Impulssignals führt. Diese Vorrichtung erlaubt darüber hinaus nicht, den Ultraschallstrahl zu fokussieren und beiderseits der Normalen zu den Piezoelementen abzutasten.

Aus der EP-A-0 161 587 ist eine Schallabbildungsanordnung für medizinische Zwecke auf der Basis eines Phaseneinstellgitters aus Piezoelementen bekannt, wobei in jedem Empfangskanal ein Verstärker und eine regelbare Verzögerungsleitung vorgesehen sind. Die Anzahl der Empfangskanäle entspricht der Anzahl der Piezoelemente.

Aus der DE-A-3 004 689 ist eine Ultraschallabbildungseinrichtung mit einer Reihenschaltung zur Erregung von Piezoelementen zum Senden und mit einer Parallelschaltung zur Verarbeitung von empfangenen Signalen beschrieben. Die Anzahl der Verstärker und der Verzögerungsleitungen im Empfangskanal entspricht der Anzahl der Piezoelemente im Gitter. Daher ist die Sicherheit und die Zuverlässigkeit der Überwachung verhältnismäßig gering.

Der Erfindung liest die Aufgabe zugrunde, einen Ultraschallwandler zu schaffen, bei welchem die Sicherheit bei der Ultraschallprüfung von Erzeugnissen durch einen vergrößerten Abtastsektor wesentlich erhöht wird.

Diese Aufgabe wird erfindungsgemäß durch die kennzeichnenden Merkmade des Patentanspruchs 1 gelöst.

Bevorzügte Weitesbildüngen und Axisgestaltüngen des erfindüngsgemäßen Ultraschallwandlers sind Gegenstand des Patentansprüche 2 bis 4.

Nachfolgend wird die Erfindung an hand das in das zeichurung darsgestellten Ausführungsbeispiele näher erläutert. Es zeigen :
Fig. 1 ein Blockschaltbild des erfindungsgemäßen Ultraschallwandlers,
Fig. 2 ein Blockschaltbild des erfindungsgemäßen Phasendrehers,
Fig. 3 ein elektrisches Schaltbild des erfindungsgemässen Phasendrehers,
Fig. 4 eine erfindungsgemäße Schaltung zur Steuerung des Neigungswinkels der akustischen Welle und
Fig. 5 a, b, c, d, e Zeitdiagramme zur Veranschaulichung der Funktionsweise der Schaltung zur Steuerung des Neigungswinkels der akustischen Welle.

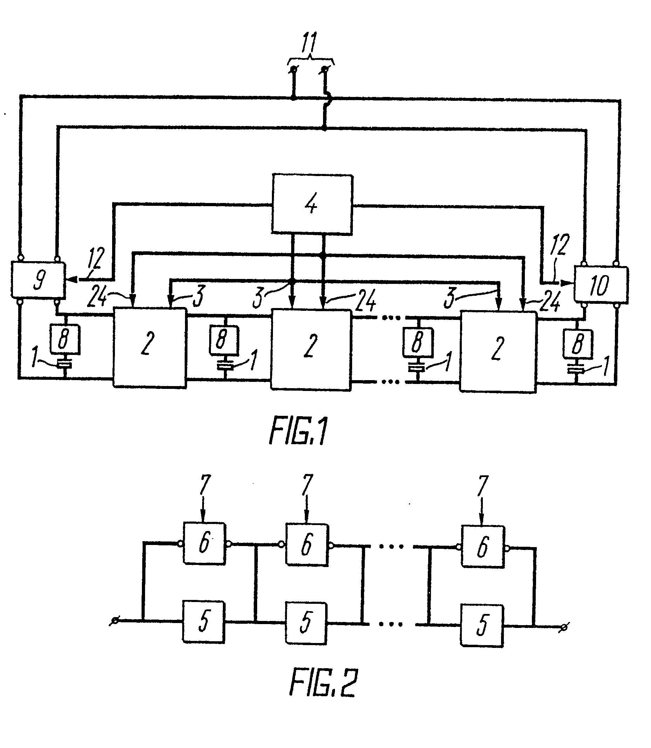

Der Ultrachallwandler zur Umwandlung eines akustischen Welle in ein elektrisches Signal und umgekehrt enthält Piezoelemente 1 (Fig. 1), die in einem Abstand voneinander angeordnet sind, der die Länge der akustischen Welle unterschreitet oder ihr gleich ist. Die Anzahl der Piezoelemente 1 wird ausgehend von der gewünschten Breite des Wandlerrichtdiagramms gewählt.

Die Piezoelemente 1 sind zu einer Reihenkette durch Schaltungen 2 zur elektrischen Signalübertragung

2

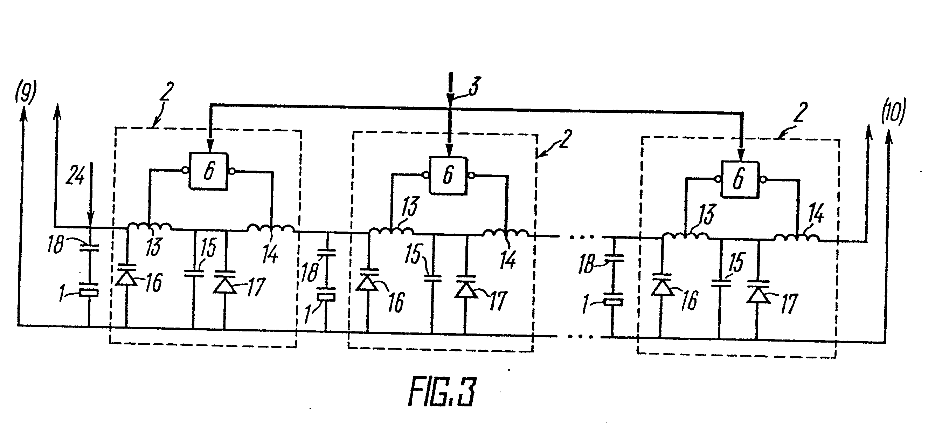

elektrisch mitemandes, deren Eingänge an die Ausgänge 3 einer Schaltung 4 zur Steuerung des Neigungswinkels der akustischen Welle angeschlossen sind. Die Schaltung 2 zur elektrischen Signalübertragung stellt einen Phasendreher dar, der zumindest zwei Verzögerungsleitungen 5 (Fig. 2) enthält, die in Reihe geschaltet sind, während zu jeder Leitung 5 ein elektronischer Schalter 6 parallel geschaltet ist. Dabei ist der Steuereingang 7 jedes Schalters 6 an die Ausgänge der Steuerschaltung 4 angeschlossen.

In Reihe mit jedem Piezoelement 1 ist eine schaltung 8 (Fig. 1) zur Erzeugung einer Signalamplitude geschaltet, deren jeder Eingang mit dem Eingang des mit ihr benachbarten Phasendrehers verbunden ist.

Mit dem Eingang der Schaltung 8 zur Erzeugung einer Signalamplitude für das erste Piezoelement 1 ist der Ausgang eines ersten elektronischen Schalters 9 verbunden, während mit dem Eingang der schaltung 8 zur Erzeugung einer Signalamplitude für das letzte Piezoelement 1 der Ausgang eines zweiten elektronischen Schalters 10 verbunden ist. Die Eingänge der Schalter 9 und 10 sind parallelgeschaltet und dienen als Eingang 11 des Ultraschallwandlers, während die Steuereingänge 12 der Schalter 9 und 10 mit den Ausgängen der Steuerschaltung 4 verbunden sind.

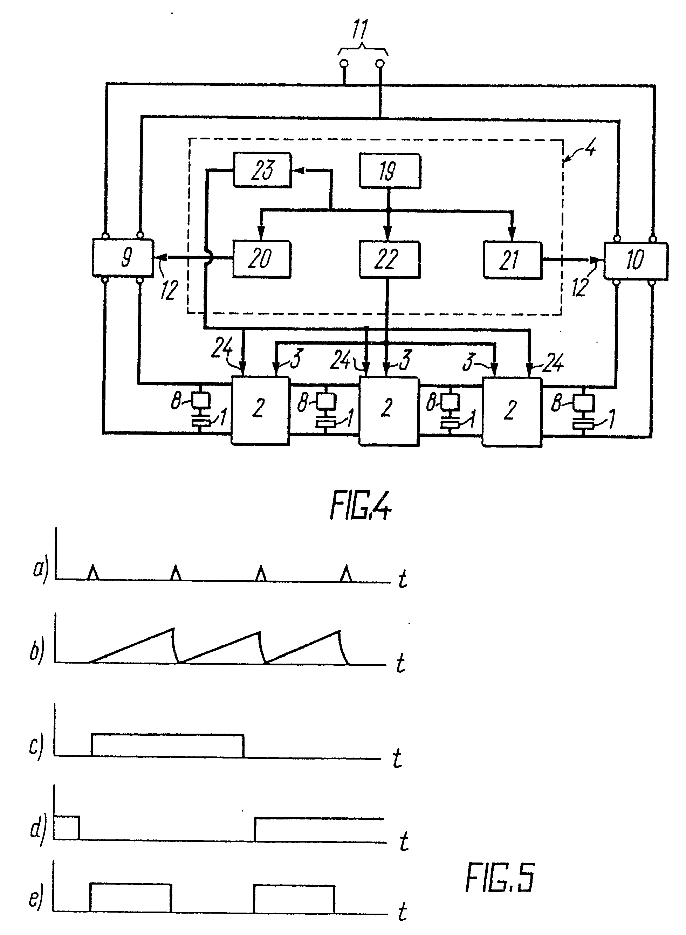

Fig. 3 zeigt das elektrische Schaltbild des Phasendrehers, das eine Verzögerungsleitung mit Induktivitäten 13, 14, einem Kondensator 15 und zu diesem parallel geschalteten Kaparitäts dioden 16 und 17 enthält. Die Mittelanschlüsse der Induktivitäten 13 und 14 sind mit den Ausgänge des elektronischen Schalters 6 verbunden.

Die Schaltung 8 zur Erzeugung einer Signalamplitude für das Piezoelement 1 ist als Kondensator 18 gestaltet, jedoch kann sie auch andere Ausführungsformen haben.

Die Schaltung 4 zur Steuerung des Neigungswinkels enthält einen Synchronisierimpulsgenerator 19 (Fig. 4) und zwei monostabile Multivibratoren 20 und 21, die an den Ausgang des Generators 19 angeschlossen sind. Der Ausgang des monostabilen Multivibrators 20 ist mit dem Steuereingang 12 des elektronischen Schalters 9 und der Ausgang des monostabilen Multivibrators 21 mit dem Steuereingang 12 des elektronischen Schalters 10 verbunden.

Die Schaltung 4 enthält einen dritten monostabilen Multivibrator 22, der an den Ausgang des Generators 19 angeschlossen ist. Der Ausgang des Multivibrators 22 ist mit den Steuereingängen 3 der Phasendreher verbunden.

An den Ausgang des Generators 19 ist ein Wechselspannungsgenerator 23 angeschlossen, dessen Ausgang mit den anderen Steuereingängen 24 des Phasendrehers verbunden ist. Die Steuereingänge 24 des Phasendrehers können miteinander und mit dem Eingang des Phasendrehers verbunden werden.

Der Phasendreher kann auch als gekreuzte Leitung aus Induktivitäten und Kapazitäten gestaltet werden.

Der Ultraschallwandler zur Unwandlung eines akustischen Signals in ein elektrisches funktioniert folgenderweise.

Der Synchronisierimpulsgenerator 19 erzeugt eine Folge von Synchronisierimpulsen (Fig. 5a), die an den Eingängen der monostabilen Multivibratoren 20, 21 und 22 und des Wechselspannungsgenerators 23 eintreffen. Am Ausgang des Generators 23 wird eine Wechselspannung, z.B. eine sägezahnförmige (Fig. 5 b) erzeugt, die die Kapazitätsdioden 16 (Fig. 3) ansteuert. Der monostabile Multivibrator 20 erzeugt eine Folge von Rechteckimpulsen (Fig. 5c), durch die der elektrische Schalter 9 leitend oder gesperrt wird, während der monostabile Multivibrator 21 eine Folge von Impulsen (Fig. 5d) erzeugt, die den elektronischen Schalter 10 entsperren oder sperren. Wenn der elektronische Schalter 9 gesperrt ist, ist dabei der elektronische Schalter 10 leitend und umgekehrt. Die Ausgangssignale (Fig. 5e) vom Ausgang des Multivibrators 22 steuern dabei die elektronischen Schalter 6 (Fig. 3) in den Phasendrehern an, so dass in diesen die Anzahl der ausgeschalteten Glieder der Verzögerungsleitung geändert wird.

Bei Abstrahlung wird das Ultraschallsignal über den leitenden Schalter 9, dem ein Öffnungsimpuls (Fig. 5c) zugeleitet ist, dem Eingang der Schaltung 8 zur Erzeugung einer Signalamplitude für das erste Piezoelement 1 und dem Eingang des ersten Phasendrehers zugeführt. Die Phasen $\varphi$ des Übertragungsfaktors der Phasendreher sind durch folgenden Ausdrück approximiert:

$$\varphi = kd \cdot \sin\theta + \gamma_n k^2 d^2 \quad (1),$$

worin k      die Wellenzahl,
d        die Abstand zwischen den benachbarten Piezoelementen,
$\theta$       die Neigungswinkel der akustischen Welle,
$\gamma_n$      ein Faktor, der durch die Brennpunktkoordinaten und die Nummer des Piezoelementes definiert wird, ist.

Die Erregerphase $\varphi_n$ des n-ten Piezoelementes wird definiert als Phasensumme der Übertragungsfaktoren sämtlicher Phasendreher, die das elektrische Signal durchlaufen hat, und beträgt:

$$\varphi_n = (n - l)\, \varphi_n = (n - l)\, kd \sin \theta + (n - l)\, \gamma_n k^2 d^2 \quad (2)$$

Der erste Summand im Ausdruck (2), der der linearen Signalphasenverteilung bezogen auf die Piezoelemente 1 entspricht, bestimmt den Neigungswinkel der in das zu prüfende Erzeugnis ausgestrahlten akustischen Welle und den elektrischen Abtastvorgang, während der zweite Summand, der dem quadratischen Phasenverteilungsgesetz entspricht, die Fokussierung der Ultraschallschwingungen bedingt. Der Winkel $\theta$ und der Faktor $\gamma_n$, der mit den Brennpunktkoordinaten im Zusammenhang steht, kann dabei z.B. dadurch verändert werden, daß die Kapazitäten der zu den Phasendrehern gehörenden Kapazitätsdioden 16 (Fig. 3) verändert werden.

Die Signalamplitude an jedem Piezoelement 1 hängt von Amplitudenübertragungsfaktor der Schaltung 8 zur Erzeugung einer Signalamplitude für das ihr zugeordnete Piezoelement ab. Somit werden an den Piezoelementen 1 die erforderlichen Amplituden- und Phasenverteilungen erzeugt, die die Richtungsdiagramme für den Ultraschallwandler bestimmen.

Wird der Steuerelektrode des elektronischen Schalters 10 ein Öffungssignal (Fig. 5d) zugeleitet, werden die elektrischen Signale vom Eingang 11 des Wandlers über den Schalter 10 dem letzten Piezoelement 1 über die Schaltung 8 zur Erzeugung der Amplitude seines Signals und dem Eingang der in Reihe geschalteten Phasendreher an der im Vergleich zur vorhergehenden Betriebsart entgegengesetzten Seite zugeführt. Der Neigungswinkel der akustischen Welle wird dabei durch den entgegengesetzten ($C + \theta$ durch $- \theta$) ersetzt, d.h. die elektrische Abtastung und die Fokussierung erfolgen auf der zur Normale gegenüberliegenden Seite.

Jeder Phasendreher kann als Kette aus in Reihe geschalteten Verzögerungsleitungen 5 gestaltet werden, parallel zu welchen elektronische Schalter 6 (Fig. 3) geschaltet sind. Als Leitungen 5 sind T- und U-förmige Elemente aus LC-Gliedern, sogenannte "gekreuzte Leitungen" und weitere ähnliche Kreise anwendbar. Der Neigungswinkel der durch die Piezoelemente 1 ausgestrahlten akustischen Welle steht mit den Kennwerten der Verzögerungsleitung in folgendem Zusammenhang :

$$\sin \theta = \frac{m + \vartheta}{kd} \quad , \qquad (3)$$

worin t Die Verzögerungszeit pro Leitung ;
m die Anzahl der Leitungen im Phasendreher ;
v die Ultraschallsignafrequenz ist.

Wie der Ausdruck (3) ergibt, bewirkt die Änderung der Anzahl der Verzögerungsleitungen in den Phasendrehern eine diskrete Änderung des Strahlneigungswinkels. Die Anzahl der Leitungen wird mittels der elektronischen Schalter 6 (Fig. 2) verändert, die auf die Impulse (Fig. 5e) vom monostabilen Multivibrator 22 ansprechen.

Durch die (Fig. 3) in Reihe mit den Piezoelementen 1 geschalteten zusätzlichen Kondensatoren 18 wird die Erzeugung der erwänschten Amplitudenverteilung bezogen auf die Piezoelemente 1 ermöglicht. Dadurch wird es wiederum möglich, den Seitenblattpegel des Richtdiagramms zu verringern oder seinen Hauptstrahl zu verengen. Die Größe des zusätzlichen kapazitiven Widerstandes $Z_n$ wird ermittelt zu :

$$Z_n = \frac{I - A_n}{A_n}\, Z \quad ; \qquad (4),$$

worin Z die Impedanz des Piezoelementes,
$A_n$ die normierte berechnete Signalamplitude am n-ten Piezoelement ist.

Wert Phasendreher mit phasengeregelten Übertragungsfaktoren angewendet werden, an deren Eingang und Ausgang elektronische Schalter geschaltet sind, wird die Abtastung in einem breiteren Winkelbereich beiderseits der Normale und die Fokussierung der akustischen Welle gesichert.

Dadurch wird die Prüfleistung erhöht, da die Anzahl der Kontrolldurchläufe bei der Prüfung dickwandiger Erzeugnisse verringert wird. Wert in dem erfindungsgemässen Wandler individuelle Verstärker für jedes Piezoelement, die in den bekannten Wandlern verwendet werden, entfallen sowie dazu die Fokussierung der Ultraschallenergie herangezogen wird, werden Sicherheit und Zuverlässigkeit der Prüfungsergebnisse erhöht. Das wird durch Anwendung der Schaltungen zur Erzeugung einer Signalamplitude begüntigt, die in Reihe mit jedem Piezoelement geschaltet sind.

## Ansprüche

1. Ultraschallwandler zur Umwandlung einer akustischen Welle in ein elektrisches Signal und umgekehrt, mit wenigstens zwei über als Phasendreher aüsgebildete Schaltungen (2) zur elektrischen Signalübertragung miteinander in Reihe geschaltete Piezoelementen (1), deren Abstand gleich oder kleiner ist als die Länge der akustischen Welle mit deren eine Schaltung (8) zur Erzeugung einer Signalamplitude in Reihe geschaltet ist, deren Eingang mit dem Eingang des ihr benachbarten Phasendrehers verbunden ist, und mit einer schaltung (4) zur Steuerung des Neigungswinkels der akustischen Welle, deren Ausgänge mit jeder schaltung (2) zur elektrischen Signalübertragung verbunden sind, dadurch **gekennzeichnet,** daß ein erster und sein zweiter elektronischer Schalter (9, 10) vorgesehen sind, deren Eingänge parallelgeschaltet sind und den eingang (11) des Ultraschallwandlers darstellen, deren Ausgang mit dem Eingang der Schaltung (8) zur Erzeugung einer Signalamplitude für das erste bzw. letzte Piezoelement (1) verbunden ist und deren Steuereingänge (12) mit den Ausgängen der Schaltung (4) zur Steuerung des Neigungswinkels der akustischen Welle verbunden sind, und daß die schaltung (4) zur steuerung des Neigungswinkels der akustischen Welle einen Synchronisierrimpulsgenerator (19) enthält, dessen Ausgang an den Eingang eines ersten (20) und eines zweiten monostabilen Multivibrators (21) angeschlossen ist, deren Ausgang mit dem Steuereingang (12) des ersten (9) bzw. zweiten elektronischen Schalters (10) verbunden ist.

2. Ultraschallwandler nach Anspruch 1, dadurch **gekennzeichnet,** daß die Schaltung (4) zur Steuerung des Neigungswinkels der akustischen Welle einen dritten monostabilen Multivibrator (22) enthält, dessen Eingang mit dem Ausgang des Synchronisierimpulsgenerators (19) und dessen Ausgang mit den ersten Steuereingängen (3) der Phasendreher verbunden ist.

3. Ultraschallwandler nach Anspruch 1 oder 2, gekennzeichnet durch einen Wechselspannungsgenerator (23), dessen Eingang mit dem Ausgang des Synchronisierimpulsgenerators (19) und dessen Ausgang mit den zweiten Steuereingang (24) der Phasendreher verbunden ist.

4. Ultraschallwandler nach einem der vorstehenden Ansprüche, dadurch **gekennzeichnet,** daß jede Schaltung (2) zur Übertragung elektrischer Signale wenigstens zwei in Reihe geschaltete Elemente einer Verzögerungsleitung (5) aufweist und jedem Element ein elektronischer Schalter (6) parallel geschaltet ist, wobei der Steuereingang jedes Schalters (6) an den Ausgang der Schaltung (4) zur Steuerung des Neigungswinkels der akustischen Welle angeschlossen ist.

## Claims

1. Ultrasonic transducer for converting an acoustic wave into an electric signal and vice versa, having at least two piezoelectric elements (1) which are connected together in series via circuits (2) designed as phase shifters for electrical signal transmission, the spacing of which piezoelectric elements is smaller than or equal to the length of the acoustic wave and with which a circuit (8) for generating a signal amplitude is connected in series, the input of which circuit is connected to the input of the phase shifter adjacent thereto, and having a circuit (4) for controlling the angle of inclination of the acoustic wave, the outputs of which circuit are connected to each circuit (2) for electrical signal transmission, characterized in that a first and a second electronic switch (9, 10) are provided, the inputs of which are connected in parallel and represent the input (11) of the ultrasonic transducer, the output of which is connected to the input of the circuit (8) for generating a signal amplitude for the first or last piezoelectric element (1), and the control inputs (12) of which are connected to the outputs of the circuit (4) for controlling the angle of inclination of the acoustic wave, and in that the circuit (4) for controlling the angle of inclination of the acoustic wave contains a synchronizing pulse generator (19), the output of which is connected to the input of a first (20) and a second monostable multivibrator (21), the output of which is connected to the control input (12) of the first (9) or of the second electronic switch (10).

2. Ultrasonic transducer according to Claim 1, characterized in that the circuit (4) for controlling the angle of inclination of the acoustic wave contains a third monostable multivibrator (22), the input of which is connected to the output of the synchronizing pulse generator (19), and the output of which is connected to the first control inputs (3) of the phase shifter.

3. Ultrasonic transducer according to Claim 1 or 2, characterized by an alternating voltage generator (23), the input of which is connected to the output of the synchronizing pulse generator (19), and the output of which is connected to the second control input (24) of the phase shifter.

4. Ultrasonic transducer according to one of the preceding claims, characterized in that, for transmitting electric signals, each circuit (2) has at least two series-connected elements of a delay line (5), and an electronic switch (6) is connected in parallel with each element, the control input of each switch (6) being connected to the output of the circuit (4) for controlling the angle of inclination of the acoustic wave.

## Revendications

1. Convertisseur ultrasonore pour la conversion d'une onde acoustique en un signal électrique et vice-versa, avec au moins deux éléments piézo-électriques (1) reliés en série l'un avec l'autre pour la transmission de signaux électriques au moyen d'éléments (2) configurés comme moyens de rotation de phase, dont la distance est identique ou plus petite que la longueur de l'onde acoustique et avec lesquels est relié en série un élément (8) pour la production d'une amplitude de signal dont l'entrée, est reliée à l'entrée du moyen voisin de rotation de phase et avec un élément (4) pour le réglage de l'angle d'inclinaison de l'onde acoustique, dont les sorties sont reliées à chaque élément (2) pour la transmission des signaux électriques, caractérisé en ce qu'un premier et un second commutateur électrique (9, 10) sont prévus, dont les entrées sont en parallèles et forment l'entrée (11) du convertisseur ultrasonore, dont la sortie est reliée à l'entrée de l'élément (8) pour la production d'une amplitude de signal pour le premier ou, respectivement, le dernier élément piézo-électrique (1) et dont les entrées de commande (12) sont reliées aux sorties de l'élément (4) pour le réglage de l'angle d'inclinaison de l'onde acoustique et en ce que l'élément (4) pour le réglage de l'angle d'inclinaison de l'onde acoustique contient un générateur d'impulsions de synchronisation (19) dont la sortie est reliée à l'entrée d'un premier (20) et d'un second (21) multivibrateurs monostables, dont la sortie est reliée à l'entrée de commande (12) du premier (9) ou, respectivement, du second commutateur électronique (10).

2. Convertisseur ultrasonore selon la revendication 1, caractérisé en ce que l'élément (4) pour le réglage de l'angle d'inclinaison de l'onde acoustique contient un troisième multivibrateur monostable (22), dont l'entrée est reliée à la sortie du générateur d'impulsions de synchronisation (19) et dont la sortie est reliée aux premières entrées de commande (3) du moyen de rotation de phase.

3. Convertisseur ultrasonore selon la revendication 1 ou 2, caractérisé par un générateur de tension alternative (23) dont l'entrée est reliée à la sortie du générateur d'impulsions de synchronisation (19) et dont la sortie est reliée à la seconde entrée de commande (24) du moyen de rotation de phase.

4. Convertisseur ultrasonore selon l'une quelconque des revendications précédentes, caractérisé en ce que chaque élément (2) pour la transmission de signaux électriques présente au moins deux éléments en série d'un circuit de retard (5) et à chaque élément est relié en parallèle un commutateur électronique (6), l'entrée de commande de chaque commutateur (6) étant raccordée à la sortie de l'élément (4) pour le réglage de l'angle d'inclinaison de l'onde acoustique.

FIG.1

FIG.2

FIG.3

FIG.4

FIG.5